# EUROPEAN PATENT APPLICATION

(11) **EP 4 670 900 A1**
(43) Date of publication of application: **31.12.2025**
(21) Application number: 25184900.6
(22) Date of filing: 24.06.2025
(51) Int. Cl.: B23K 26/70, B23K 37/006

(54) **SYSTEMS FOR HANDHELD LASER TOOLS WITH ACTIVATION BEACONS**

(30) Priority: 28.06.2024 US 202463666077 P; 11.06.2025 US 202519234649
(71) Applicant: Illinois Tool Works Inc., Glenview IL 60025 (US)
(72) Inventor: SCHNEIDER, Joseph C., Glenview, 60025 (US); HOLVERSON, Todd E., Glenview, 60025 (US); WOODKE, Connor, Glenview, 60025 (US)
(74) Representative: HGF

(57) **Abstract**

Systems and methods for laser welding are disclosed. A laser welding system employs a beacon to indicate laser welding will or has commenced. The beacon emits an intense light in a visible spectrum, such that a filter or lens is needed to block the intensity of the light.

## Description

### CROSS REFERENCE TO RELATED APPLICATIONS

This application is a Non-Provisional Patent Application claiming priority to U.S. Provisional Patent Application No. 63/666,077 entitled "Systems And Methods For Handheld Laser Tools With Activation Beacons" filed June 28, 2024, which is herein incorporated by reference in its entirety.

### BACKGROUND

Welding is a process that has historically been a cost effective joining method. Welding is, at its core, a way of bonding two pieces of parent material. Laser welding is a welding technique used to join multiple pieces of metal through the use of a laser. The laser beam provides a concentrated heat source, enabling precise control of the heat input and high welding speed, creating a weld with low heat input, and a small heat affected zone. In various applications, filler metal may be needed for different purposes such as filling a gap between workpieces, reinforcing the joint, overlaying a substrate surface, building up an object, or acting as a buffering medium.

Laser-based welding tools employ powerful lasers. Even welders with long experience with arc-related welding systems may be unfamiliar with personal protective equipment (PPE) or best practices for a laser welding system. Thus, systems and/or methods that instruct and incentivize users on proper use of PPE and laser welding equipment is desirable.

### SUMMARY

This disclosure relates generally to a beacon for laser welding systems, methods, and apparatuses. More particularly, this disclosure relates to manually operated laser welding systems and torches, which employ a beacon to indicate laser welding has commenced, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example laser type welding system employing a beacon, in accordance with aspects of this disclosure.
FIG. 2 illustrates another example laser type welding system, in accordance with aspects of this disclosure.
FIGS. 3A to 3D illustrate example beacon designs for use with a welding device, in accordance with aspects of this disclosure.
FIGS. 4A to 4C provide graphical representations of example emission, laser and filtered wavelengths relative to the visual spectrum, in accordance with aspects of this disclosure.

The figures are not necessarily to scale. Wherever appropriate, similar or identical reference numerals are used to refer to similar or identical components.

### DETAILED DESCRIPTION

Disclosed example systems and methods for laser welding are provided. In particular, disclosed example laser welding systems include a manually operated laser welding torch to direct laser power to a workpiece to generate a puddle during a laser welding operation. The welding system includes a controller to regulate activation and regulation of the laser power based on user inputs, sensor inputs, and/or synergic control of a laser power source.

Conventional handheld laser welding systems use powerful lasers that can cause damage to equipment and present hazards to personnel if certain precautions are not followed. To avoid such hazards to those in the environment, operators and bystanders within the welding environment should wear appropriate PPE (e.g., within range of the laser beam and/or in a position to view a reflection of the laser beam).

For example, exposure to laser light can inflict severe retina and/or cornea injuries leading to permanent eye damage and can cause skin damage. Some laser light, including the welding (or cleaning) beam (with a wavelength of approximately 1070 nm), is invisible to a human. All persons in a laser welding environment should wear all appropriate personal protective equipment (PPE), including laser protective eyewear to protect against eye damage from any reflected or scattered laser beams as well as welding bright light, ultraviolet (UV) light, heat and sparks. Additional PPE can also be helpful, including a laser welding helmet, heat resistant gloves, caps, jackets, leather apron and other heat resistant clothing.

Arc welding generates a bright light as a byproduct of the arc, which serves as a warning to those nearby to protect themselves from the arc. Laser welding, by contrast, does not present a bright light, as the laser beam is not generated in a visible part of the spectrum.

It is therefore desirable to equip an operator of a handheld laser welding device with devices and procedures that encourage compliance with proper set up and laser welding techniques. This includes at least providing the operator with PPE designed to protect the operator, and anyone within range of the laser beam. This can include headgear (e.g., helmets, glasses, goggles, face shields, etc.) and robust heat-resistant clothing (e.g., welding aprons, jackets, gloves, etc.) to provide physical protection of the operator, as well as devices designed to inform, alert, and/or guide the operator through processes to encourage proper operation of the laser welding equipment. The PPE, protective devices, and/or protective procedures may be designed to be worn, used, and/or carried out by the operator of the laser welding equipment and/or another within range of the laser beam.

In some examples, one or more welding devices can employ a beacon (e.g., a visual, light-enabled beacon) to inform the operator and/or a bystander that a laser welding operation is imminent and/or ongoing. In examples, the visual beacon emits a bright light in the visual spectrum, designed to draw the attention of the operator/bystander.

In examples, the bright light can have an intensity too great to endure. If the beacon is arranged on or near the point of welding (e.g., on the handheld laser welding torch), the operator would need to filter the bright light from the beacon in order to visually monitor the active weld. Thus, a pair of goggles, glasses, face shield, and/or helmet may provide the filtering capacity needed to view the weld.

In some examples, a bright light emanates from the beacon, which is mounted to the torch, and delivering the bright light in multiple directions while the laser beam of the torch is enabled, active, and/or about to emit a laser beam. The bright light may be generated from one or more LEDs placed on one or multiple sides of the beacon, and/or multiple beacons can be arranged on the torch.

The beacon light would be bright enough to encourage those in the welding area to recoil from the beacon, look away and/or cover their eyes. In some examples, the light from beacon would be triggered by some event prior to delivery of the laser beam. For example, when the laser power source is activated, the beacon could also active, presenting the bright light for a predetermined amount of time (e.g., several seconds) in advance of delivering the laser beam. This would provide time for the operator or bystander to don the appropriate PPE (including eye protection). Additionally or alternatively, the beacon can be activated continuously during a laser welding operation, to encourage those in the welding area to wear appropriate PPE while the laser beam is being applied.

In some examples, the bright light from the beacon can be filtered by a lens, such as the lens of laser goggles, face shields, glasses, and/or a welding helmet. In examples, the filter can selectively filter an amount and/or type (e.g., frequency, wavelength, power, etc.) of light from the beacon. For instance, the intensity of the bright light can be reduced or eliminated (e.g., scattered, attenuated, etc.), and/or one or more wavelengths can be treated from the beacon (e.g., if the bright light is a polychromatic light). In some examples, the bright light is mostly filtered (e.g., substantially but not completely) so the light from the beacon remains visible, but is not an impediment to the operator's view.

It is appropriate to protect eyes from excessive light by wearing glasses, goggles, and/or other protective lenses when in an environment with high intensity light emissions (such as laser welding).

Advantageously, protection can be provided by light being blocked (scattered) and/or attenuated (absorbed) by protective media. For example, a portion of the light energy can be reflected, transmitted, and/or absorbed.

The majority of light energy outside the visual spectrum (such as laser light) would ideally be reflected. In some examples, a portion of the light is transmitted through the lens, such that the viewer is aware the beacon is active (and that the welding laser is still active). This can affect the intensity of the light energy as well. For instance, intense light energy in the visual spectrum would ideally be attenuated to a comfortable level for the viewer.

Thus, for an operator conducting a laser welding operation, use of suitable lenses allows the operator to view the weldment while protecting their eyes both from light emitted from the beacon, as well as light energy used in the welding process (e.g., emitted from the handheld laser welding tool, reflected from the weldment or other surface, etc.).

Thus, improved laser protective glasses and/or lenses would filter out the laser (example 1070 nm) and greatly reduce the intense light emitted from the beacon (e.g., within the visible spectrum, such as in the visible violet spectrum at about 400 nm, and/or in the visible red spectrum at about 700 nm). The light could also be pulsed at a high frequency and the goggles could be designed to match the frequency to filter out most of the light.

In disclosed examples, a beacon for a handheld laser welding system includes one or more surfaces; and one or more light sources configured to emit light energy from the one or more surfaces in multiple directions, wherein the beacon is configured to emit light of a first intensity at a wavelength within a spectrum visible to a human.

In some examples, the beacon further includes a timer configured to emit the light energy for a predetermined amount of time before output of a welding laser.

In examples, the beacon is arranged on one or more torch surfaces of a handheld laser welding torch.

In some examples, the beacon further includes a second beacon to emit light energy from a second location remote from a handheld laser welding torch.

In examples, the second beacon is arranged on a welding power supply or a welding auxiliary system.

In examples, the beacon and the second beacon are configured to operate in response to command signals from one or more control circuits.

In examples, the one or more control circuits transmit the command signals via wired or wireless communications protocols.

In examples, the one or more control circuits are located in the handheld laser welding torch, handheld laser cleaning tool, the laser welding power supply, or the laser welding auxiliary system.

In some examples, an intensity or concentration of the light emitted from a first surface of the plurality of surfaces is different light emitted from a second surface of the plurality of surfaces.

In some disclosed examples, a laser welding system includes a laser welding accessory; a beacon arranged on the laser welding accessory, the beacon configured to emit light of a first intensity at a wavelength within a spectrum visible to a human; and a lens configured to filter or attenuate the light, such that a filtered light has a second intensity lower than the first intensity.

In some examples, the accessory is a power supply or a wire feeder or a torch or an andon light.

In examples, the lens is incorporated with or mounted on a welding helmet, goggles, a face shield, or glasses.

In examples, the lens is configured to filter light at the first intensity wavelength, and an infrared (IR) wavelength.

In examples, the lens is further configured to filter light at an ultraviolet (UV) wavelength.

In some examples, the beacon is configured to be activated by a control circuit, the control circuit configured to receive one or more instructions from the laser welding system corresponding to an initiation sequence for the handheld laser welding torch; and activate the beacon in response to the activation sequence.

In examples, the control circuit is further configured to deactivate the beacon upon completion of a laser welding operation.

In examples, the control circuit is further configured to control a frequency or pattern of the emitted light.

In examples, the frequency or pattern comprises a uniform pulse.

In examples, the frequency or pattern comprises an irregular pulse.

In some additional disclosed examples, a beacon for a robotic laser welding system, wherein the beacon is arranged on one or more surfaces of the robotic laser welding system, the beacon configured to emit light of a first intensity at a wavelength within a spectrum visible to a human.

In some examples, the emitted light has the first intensity in a first direction and a second intensity at a second direction, the first direction is within a threshold angle of an output nozzle of a laser welding torch of the robotic laser welding system.

In examples, the robotic laser welding system is a collaborative robot system.

In some examples, the beacon includes a sensor to detect a level of ambient light in the welding environment, the beacon configured to emit light at the first intensity when the ambient light is below a threshold level, and emit light of a second intensity when the ambient light is above the threshold level. In examples, the beacon is configured to emit light at a third intensity when the ambient light is above a second threshold level.

As used herein, the word "exemplary" means serving as an example, instance, or illustration. The examples described herein are not limiting, but rather are exemplary only. It should be understood that the described examples are not necessarily to be construed as preferred or advantageous over other examples. Moreover, the term "examples" does not require that all examples of the disclosure include the discussed feature, advantage, or mode of operation.

As used herein, a welding-type system and/or wire-fed welding-type system refers to a system capable of performing laser beam welding (LBW - the process by which materials are fused together by laser light from a laser source), including brazing, cladding, hardfacing, cleaning, ablating, and/or other processes such as hybrid welding, which may include arc welding (e.g., gas metal arc welding (GMAW), gas tungsten arc welding (GTAW), plasma welding and/or cutting, etc.). In some examples, a filler metal is provided by a wire that is fed to a work location, such as a weld puddle (or arc).

As used herein, the term "welding-type operation" includes a welding operation employing a laser welding systems using laser energy, operable to fuse, bind, clean and ablate, and/or cut one or more materials and/or layers of materials.

As used herein, a welding-type power source refers to any device capable of, when power is applied thereto, supplying welding, cladding, plasma cutting, induction heating, laser (including laser welding, laser cleaning, and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

For the purpose of promoting an understanding of the principles of the claimed technology and presenting its currently understood best mode of operation, reference will be now made to the examples illustrated in the drawings, and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

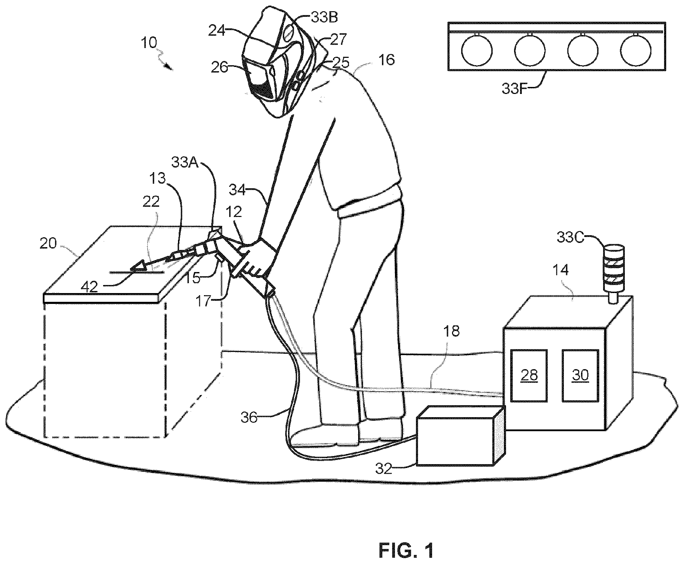

FIG. 1 is a schematic diagram of an example laser welding system 10. The example laser welding system 10 of FIG. 1 includes a laser welding power supply 14, a laser power source 28, a laser controller 30 (e.g., a processing circuitry, control circuitry, memory circuits, interface and/or communication circuitry, etc.), and a wire feeder 32. A handheld laser welding torch 12 is connected to the power supply 14 via power cable 18, and receives wire 36 from the wire feeder 32. In some examples, the handheld laser welding torch 12 includes one or more of a nozzle 13, one or more user input devices 17 (e.g., a trigger, a knob, graphical interface, interlock, etc.), and/or one or more sensors 15 (e.g., an accelerometer, an inertial measurement unit (IMU), a gravimeter, a laser scanner, a wireless transceiver, an ultrasound sensor, a mechanical sensor, temperature sensor, a magnetometer, a gyroscope, an optical sensor, an electrical sensor, etc.).

The laser source 28 generates welding-type laser power to output a laser beam 42 (e.g., directed light energy) based on input power received from the power supply 14. The laser source 28 may be a light emitting a CO₂ laser, Nd:YAG laser, diode-type laser, fiber laser, disk laser or any other type of laser generator. As used herein, welding-type lasing power refers to laser power having wavelength(s) that are suitable for delivering energy to metal for welding, cutting, and/or cladding. Laser cleaning operations (e.g., laser ablation) are also conducted by directing one or more laser beams on the workpiece. For instance, the handheld laser welding torch 12 scans the laser beam across the workpiece to remove unwanted material (e.g., metal particulates, splatter, rust, paint, contaminants, oil, primer, etc.).

An operator 16 can wear one or more of a wearable 34 (such as a glove, a jacket, etc.) and/or a helmet and/or glasses 24 to protect the welder's eyes and skin, for instance. In some examples, the helmet 24 includes a lens and/or screen 26, which may be configured to automatically dim when exposed to intense light, may be a filter for one or more wavelengths (e.g., ultraviolet, infrared, etc.), and/or may be connected to another part of the system (e.g., controller 30). This allows the screen 26 to present information to the operator 16 to inform the welding process. Helmets and glasses are often used during a welding operation, including set up of the welding station, calibration, and/or to oversee automated (e.g., robotic) welding operations.

As shown in FIG. 1, the system 10 includes one or more beacons 33. For example, the handheld laser welding torch 16 includes one or more beacons 33A arranged on a surface of the handheld laser welding torch. The beacon 33A is configured to emit light (e.g., from one or more light emitting diodes (LED)) in multiple directions. This provides the light towards multiple areas within the welding environment, notably the welder 16. As a result, a viewer of the emitted light will be compelled to avert their gaze and/or shield their vision (e.g., with goggles, glasses, a face shield, a welding helmet 24, lens, etc.) from the beacon's light. Although the light from the beacon may cause the operator to look away and/or cover their eyes, the wavelength and intensity of the light will be within a range acceptable to a viewer, even over extended exposure times.

In some examples, an intensity of the beacon light output is configurable and/or controllable. For instance, the perceived intensity of the light from the beacon changes relative to environmental or ambient light. Thus, if the welding environment has a lot of natural and/or artificial light, the beacon light intensity should be increased in order to remain visible in different lighting conditions. In this manner, the intensity of the light from the beacon can be changed to have a consistent effect (e.g., encourage an operator to don eyewear), regardless of the amount or level of light in the environment.

In some examples, an intensity of the beacon can be controlled in response to readings from a senor (e.g., a photodiode, which can be sensor 15 and/or a separate sensor) to detect and/or measure a level of ambient light. For example, the sensor can be arranged near the workpiece (e.g., on the torch 12) and/or elsewhere in the welding environment. The sensor (and/or the controller 30) can determine the amount of light in the environment to determine how intense the light from the beacon should be to have the desired effect. For example, the controller may access a look up table and/or compare environmental light to historical data to determine the light intensity output for the beacon. In some examples, the beacon has a minimum intensity value and a maximum intensity value (e.g., corresponding to substantial darkness and substantial daylight, respectively).

The beacon 33A may be arranged on the top of the handle of the handheld welding torch, such as between where the operator's hand holds the torch and the end that emits the laser. The intense bright light of the beacon could also consist of one or more intense LEDs on one or multiple sides and arranged to maximize the directional radiation of warning light in a multitude of directions.

The use of a beacon advantageously prompts the operator and/or bystander to don protective eyewear. This is due to the fact that mitigating the irritation caused by the light emitted with the beacon can be done with the same or similar PPE (e.g., helmet, goggles, glasses, face shield) that protect the eyes of the operator and/or bystander from exposure to laser light from a laser welding equipment (e.g., a handheld laser welding torch, a robotic laser welding torch, laser cutting system, laser cleaning system, laser-hybrid system, etc.).

In some additional or alternative examples, one or more other beacons may be included in the welding environment to amplify the effect of the emitted light and/or expand the reach of the light to a greater portion of the welding environment. In some examples, other beacons arranged in the welding environment may be configured to work independently of any other beacon, such as in the absence of a beacon on a welding torch (e.g., a robotic installation). For example, a beacon 33B may be arranged on the welding helmet 24 or other wearable. A beacon 33C may be mounted to the power supply 12, another welding accessory, and/or in the vicinity of the welding operation. For instance, a beacon 33F can be mounted to a wall, or a fixture in the work environment, to increase visibility of the beacon and light therefrom. Thus, one or more beacons 33F may be arranged in various locations within or near the work environment, serving as alert for both the operator and observers that may be present during a laser welding operation. Further, one or more of the beacons can be configured to generate sound (e.g., an alarm, verbal instructions, etc.), and/or present text (e.g., timing information, location of a welding cell, indication of laser activation, etc.). The various beacons may be connected to and/or controlled by the handheld laser welding system 10, such that each beacon illuminates at a given time (e.g., prior to generating a laser output) and/or in response to a given trigger (e.g., a user input to commence laser welding, a change in power output at the power supply 14 and/or laser power source 28, or applying power to the laser system, or after other interlocks are satisfied, etc.). Some light from the beacon may still be minimally visible thru the filter glasses, which lets the operator know the beacon, and potentially the laser, remains on (i.e. the beacon is a soft light as seen through the goggles).

The annoyingly bright visible light may be on the laser welding torch, on the laser power supply unit, at a separate remote location (e.g. an andon style, as shown in 33C), positioned at entry points of the laser process work area, and so forth.

The torch 12 focuses the laser power as a beam 42 at a joint, seam or weld 22 on a workpiece 20. The laser power 42 heats the workpiece 20 to generate a puddle during welding operations. The wire feeder 32 feeds the wire 36 (e.g., filler wire, cladding material, metal additive) to the puddle generated by the laser beam 42. The wire 36 melts into the puddle in the weld 22. The wire 36 may be fed from a wire supply, such as a wire reel or wire supply drum, and may be conveyed through a cable or other suitable conduit.

During a welding process, the laser controller 30 controls a focal point of the laser beam to wobble in multiple axes as applied to the workpiece 20. By moving the focal point in multiple directions, the laser can induce one or more beneficial effects in the weld. Examples of such beneficial effects that can be induced in the lateral direction(s) include agitating or stirring of the puddle laterally (including in patterns) to improve filler mixing, creating a heat gradient in the puddle in at least a partially lateral direction to induce movement and improve puddle wetting, and/or controlling the heating and/or cooling rates of the puddle in at least a partially lateral direction by controlling where heat is concentrated. The changing wobble patterns can be configured to adjust power distribution and to change a penetration profile of the laser.

In some examples, movement of the laser beam is controlled such that side-to-side motion is variable, random, and/or has multiple changing directions, angles, and/or lengths. For instance, side-to-side movement of the focal point may promote gap filling, wetting at the toes of a workpiece, penetration profile, etc., and may be set to a high wobble frequency (e.g., greater than 100 wobbles/movements per second). The location, movement, size and/or intensity of the laser beam itself (e.g., spot size, power output) and/or the wobble pattern (e.g., scanning pattern, frequency, etc.) can change the penetration profile and/or weld bead quality. For instance, the focal point and depth for a 3-5 mm spot size may be appropriate for materials at half an inch or thicker, and changes thereof will affect the depth and weld profile, which may be appropriate for different applications.

An additional, possibly independently controlled forward-backward motion at a lower wobble frequency could be used to result in a substantially rippled appearance, similar to a traditional ripple look of tungsten inert gas (TIG) welds, and/or other desirable characteristics.

The laser beam 42 can be controlled in any desired pattern, which may include, but is not limited to, a pattern with one or more straight lines and/or one or more curves. In some embodiments, the desired pattern may include a pause or break in the pattern, such as a time interval in which the focal point does not move. The desired pattern may include a circle, an ellipse, a zigzag, a figure 8, a transverse reciprocating line, a crescent, a triangle, a square, a rectangle, a non-linear pattern, an asymmetrical pattern, a pause, or any combination thereof. As may be appreciated, a pattern or a combination of patterns may be used and optimized for particular welds, welding positions, and/or workpiece configurations (e.g., various joints and workpieces that result in those joints). The movement of the focal point and the relative movement between the workpiece 20 and the laser torch 12 causes the focal point to trace a superimposed pattern over the workpiece 20. The example pattern may be traced by the laser beam 42 to agitate the puddle.

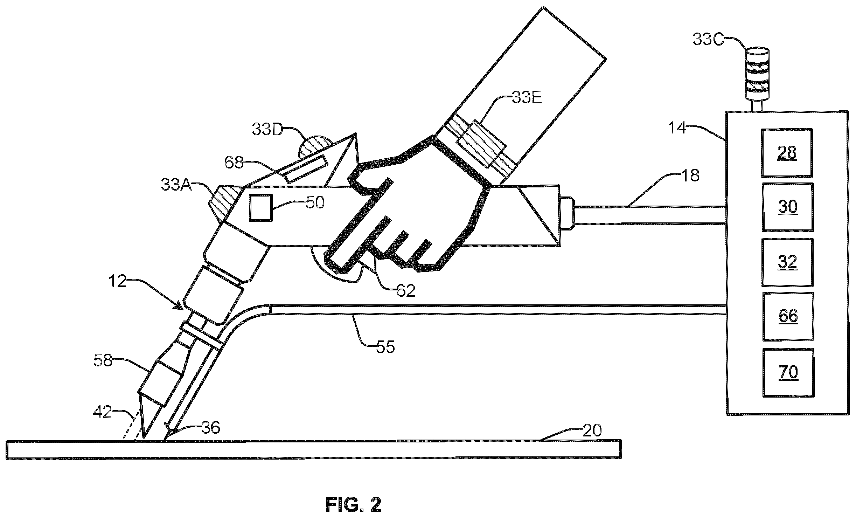

FIG. 2 illustrates a laser welding process, with laser energy 42 from a laser welding torch 12 heating a workpiece 20. In some examples, the handheld laser welding torch 12 is equipped with one or more beacons 33A, 33D. In some examples, a beacon 33E can be affixed to a wearable, configured to be affixed to and/or worn on equipment and/or clothing of the operator. The laser welding torch 12 includes a nozzle 58 equipped to direct the laser 42 to the workpiece 20, to melt a wire 36 delivered via an example wire guide 55. In some examples, the power supply 12 can include a wire feeder 32, while in some other examples the wire feeder 32 is a separate accessory. In some examples, a wire feeder is not used and/or included with the laser welding system and/or torch.

In some examples, the laser controller 30 receives information from the user (e.g., via a user interface, trigger pull, sensor data, etc.) indicating a laser welding operation is set to begin. In response, the controller can activate a timer configured to control emission of the visible light energy from the beacon for a predetermined amount of time, such as before output of a welding laser. In some examples, the timer can be controlled by the laser controller 30 and/or processing circuitry 70. The time can be controlled to operate in response to a sensor input, user input, and/or other trigger (e.g., initiation of a laser process).

In some example, the beacon is configured for activation by the laser control circuit 30 as part of an initiation sequence for the handheld laser welding process. Thus, the beacon is activated as part of the sequence, which may include one or more steps to encourage operators to employ equipment appropriately prior to laser welding. In some examples, the initiation sequence cannot proceed without the beacon being activated, and/or appropriate eye protection applied.

Once activated, the beacon can be activated with a desired intensity and/or pulse frequency. In some examples, different intensities and/or pulse frequencies can be implemented at various stages of the laser welding process. For example, prior to actual laser welding, the beacon may emit light at a first intensity and/or first pulse frequency, which may be different from a second intensity and/or second pulse frequency during the laser welding process. The emission pulse frequency may be in a constant, cyclical pattern, may be irregular/inconsistent, and/or may change over time. This may encourage viewers to notice the light over time, so as not to become used to the beacon light when laser welding is still occurring.

The operator may be able to configure the emission characteristics, such as via the user interfaces 66, 68, such as through a list of predetermined patterns. In other examples, the emission characteristics may correspond to a particular welding process (e.g., joint type, material type, welding environment, etc.).

Use of a timer would also give the operator and those nearby a period of time to don eye protection prior to commencement of the laser welding process. In some example, the beacon light is paired with an audible beacon to warn those in the environment that a laser welding process is imminent. The sound could be a tone and/or a voice providing one or more warnings, such as "Cover" or "Laser On".

The control circuitry 30, 70 can further be configured to deactivate the beacon upon completion of a laser welding operation and/or breaking of an interlock that also determines the system components are properly configured for laser welding operations.

The beacon light emission characteristics may change, depending on application, physical parameters associated with the welding process and/or environment, and/or a selected welding schedule profile.

In some examples, one or more inputs and/or instructions are received indicating initiation of a laser weld operation. Once received, the beacon(s) can be activated. Such inputs and/or instructions can be provided via a user interface 66, which can also receive inputs from the operator. In some examples, the handheld laser welding torch 12 includes a user interface 68 (e.g., a knob, switch, trigger, graphical interface, audio input device, etc.), to provide inputs and/or present information and alerts.

In some examples, a work clip 54 of a given length may be used to connect the workpiece and the laser welding power supply.

A finger or thumb guard 62 may protect the trigger and have to be moved or removed, and/or a confirmation signal (e.g., via a user interface) should be submitted in order to access the trigger and/or satisfy an interlock in order to initiate a laser welding process, thereby providing instructions to activate the beacon(s).

An alert, indicator, and/or signal 50 (e.g., visual, audible, and/or haptic feedback signal) can be used to inform the operator of the status and/or changes in status, in addition to the use of beacons. For instance, a light (e.g., a LED) may indicate laser power and/or laser welding torch status, thereby informing the operator that the welding torch is active, and a trigger pull will initiate welding.

Although several examples are described as employing a handheld laser welding torch, in some examples the beacons and/or beacon control disclosed herein can be incorporated with collaborative robot (e.g., cobot) and/or robotic and/or automation welding/cleaning systems. Although examples are provided of beacons in use for welding systems and environments, the disclosed beacon may be employed in a variety of other industrial laser settings.

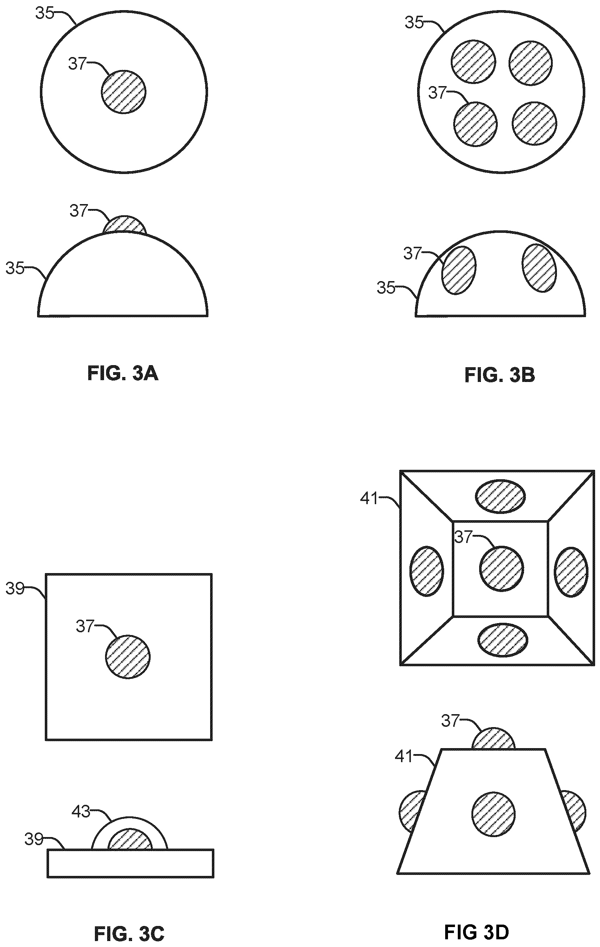

FIGS. 3A to 3D illustrate example beacon designs that can be mounted to, incorporated with, and/or integrated with a welding device (e.g., torch, power supply, accessory, remote, pendant, cable, helmet, wearable, etc.). In some examples, the beacons may be arranged within and/or near the welding environment to serve as an alert for those nearby. As shown, the beacons can consist of a base 35 and a light source 37 (e.g., a LED, a laser emitter, etc.). The bases can have a variety of shapes (as shown through bases 35, 39, 41), with one or more surfaces of the base including one or more light sources. The light sources may also be equipped with a lens 43 to diffuse and/or direct the emitted light.

In operation, the beacons are configured to emit light with a first intensity at one or more wavelengths within a spectrum visible to a human operator. The specific wavelength is variable, and selected to have a minimal discoloration and/or distortion of the workpiece, weld, and/or welding torch when viewed through the appropriate lens 26.

In some examples, the lenses 26 providing eye protection would also serve as traditional impact-rated protective glasses (e.g., impact, beacon, and laser light protection). Further, if the eye protection also filters out Ultraviolet (UV) light, it would provide some protection from incidental stray UV light from welding arcs that may be in the same work location.

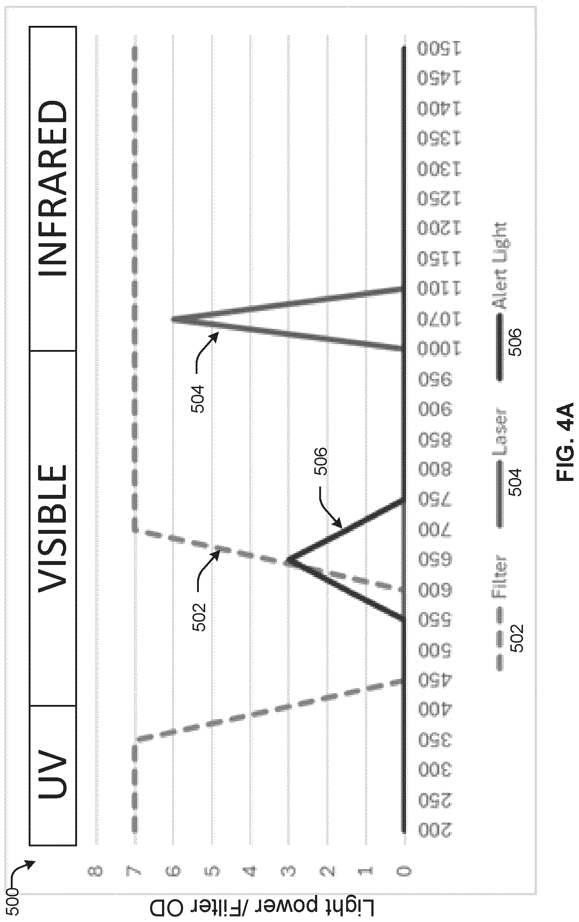

FIGS. 4A to 4C provide graphical representations 500 of example emission, laser and filtered wavelengths relative to the visual spectrum.

The graph 500 shown in FIG. 4A is an example where the eye protection blocks laser, and red visible light. In this example, a very bright (and annoying) light 506 is emitted from the beacon at a first peak and/or range of wavelengths (e.g., about 650 nm, in the range of visible red). The filter is configured to block a range of wavelengths from the bright light 506 to the laser light 504 (e.g., as shown, about 600 nm to greater than 1500 nm, with the laser light 504 having a peak at about 1070 nm). With the filter/lens properly in place, all or a portion of the beacon light 506 would be filtered before reaching the operator. Without the glasses and lens, however, the beacon light 506 would be so bright that the operator would be distracted and motivated to don suitable eye protection.

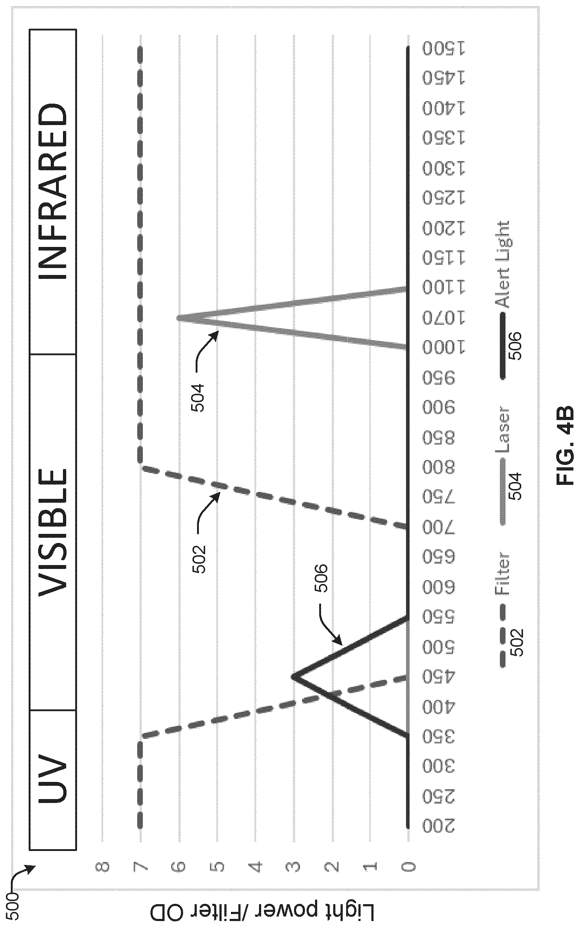

FIG. 4B provides an example graph 500 where emitted light 506 is at the first wavelength and the laser light 504 has a peak in the infrared spectrum. The lens of FIG. 4B is configured to filter ultraviolet (UV) light as well. As shown, the emitted light 506 is partially within the visible spectrum and partially within the UV spectrum. The filter is therefore configured to filter at least a portion of the emitted light 506.

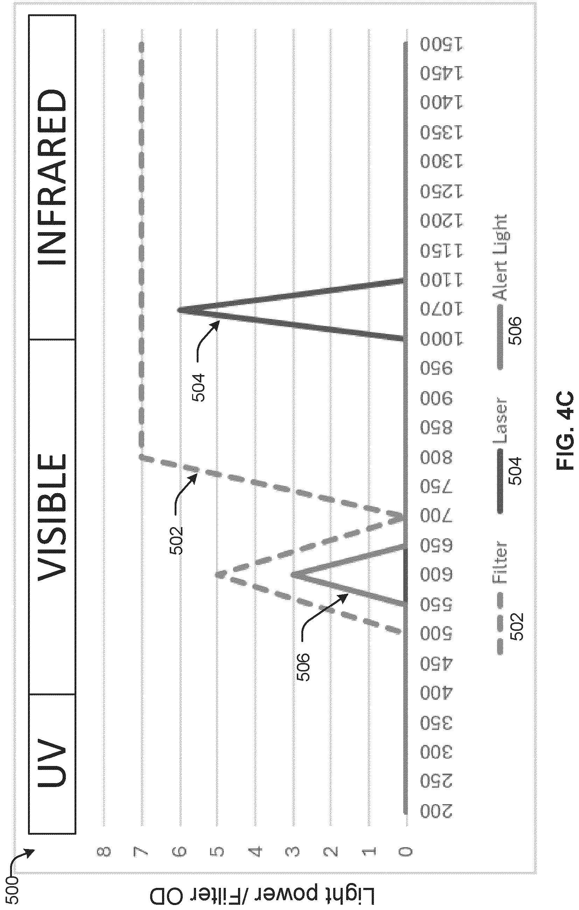

FIG. 4C shows an alternative spectrum, where the emitted light 506 is provided at a different frequency, for example, with a peak of about 600 nm. In this example, the filter range 502 would be designed to match the range of wavelengths from the emitted light 506 and laser light 504, while avoiding filtering or minimal filtering in the remaining visual spectrum. Although the lens is illustrated as filtering wavelengths aligned with the emitted light 506, and then increasing filtering in the range of the laser light 504, in some examples the filter generally filters light along all or a part of the visible spectrum, the UV spectrum, and/or the IR spectrum. The protection can be at a maximum level at all times, or may vary (e.g., as shown - to correspond to a particular emissions pattern).

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A beacon for a handheld laser welding system, comprising:
   one or more surfaces; and
   one or more light sources configured to emit light energy from the one or more surfaces in multiple directions, wherein the beacon is configured to emit light of a first intensity at a wavelength within a spectrum visible to a human.
Clause 2. The beacon of clause 1, further comprising a timer configured to emit the light energy for a predetermined amount of time before output of a welding laser, the time activating in response to initiation of a laser welding operation.
Clause 3. The beacon of clause 1, wherein the beacon is arranged on one or more surfaces of a handheld laser welding torch of the handheld laser welding system.
Clause 4. The beacon of clause 1, further comprising a second beacon to emit light energy from a second location remote from a handheld laser welding torch of the handheld laser welding system.
Clause 5. The beacon of clause 4, wherein the second beacon is arranged on a welding power supply, a welding auxiliary system, a wall, or a fixture in a work environment.
Clause 6. The beacon of clause 4, wherein the beacon and the second beacon are configured to operate in response to command signals from one or more control circuits.
Clause 7. The beacon of clause 6, wherein the one or more control circuits transmit the command signals via wired or wireless communications protocols.
Clause 8. The beacon of clause 6, wherein the one or more control circuits are located in the handheld laser welding torch, handheld laser cleaning tool, the laser welding power supply, or the laser welding auxiliary system.
Clause 9. The beacon of clause 1, wherein an intensity or concentration of the light emitted from a first surface of the plurality of surfaces is different light emitted from a second surface of the plurality of surfaces.
Clause 10. A laser welding system, comprising:
   a laser welding accessory;
   a beacon arranged on the laser welding accessory, the beacon configured to emit light of a first intensity at a wavelength within a spectrum visible to a human; and
   a lens configured to filter or attenuate the light, such that a filtered light has a second intensity lower than the first intensity.
Clause 11. The laser welding system of clause 10, wherein the accessory is a power supply or a wire feeder or a laser welding torch or an andon light.
Clause 12. The laser welding system of clause 10, wherein the lens is incorporated with or mounted on a welding helmet, goggles, a face shield, or glasses.
Clause 13. The laser welding system of clause 10, wherein the lens is configured to filter light at the first intensity wavelength, and an infrared (IR) wavelength.
Clause 14. The laser welding system of clause 13, wherein the lens is further configured to filter light at an ultraviolet (UV) wavelength.
Clause 15. The laser welding system of clause 10, wherein the beacon is configured to be activated by a control circuit, the control circuit configured to:
   receive one or more instructions from the laser welding system corresponding to an initiation sequence for the handheld laser welding torch; and
   activate the beacon in response to the activation sequence.
Clause 16. The laser welding system of clause 15, wherein the control circuit is further configured to deactivate the beacon upon completion of a laser welding operation.
Clause 17. The laser welding system of clause 15, wherein the control circuit is further configured to control a frequency or pattern of the emitted light.
Clause 18. The laser welding system of clause 17, wherein the frequency or pattern comprises a uniform pulse.
Clause 19. The laser welding system of clause 17, wherein the frequency or pattern comprises an irregular pulse.
Clause 20. A beacon for a handheld laser welding system, comprising:
   one or more surfaces; and
   one or more light sources configured to emit light energy from the one or more surfaces in multiple directions, wherein the beacon is configured to emit light of a first intensity at a wavelength within a spectrum visible to a human, wherein the beacon is mounted to a handheld laser welding system.

## Claims

1. A beacon for a handheld laser welding system, comprising:
one or more surfaces; and
one or more light sources configured to emit light energy from the one or more surfaces in multiple directions, wherein the beacon is configured to emit light of a first intensity at a wavelength within a spectrum visible to a human.

2. The beacon of claim 1, further comprising a timer configured to emit the light energy for a predetermined amount of time before output of a welding laser, the time activating in response to initiation of a laser welding operation or wherein the beacon is arranged on one or more surfaces of a handheld laser welding torch of the handheld laser welding system.

3. The beacon of claim 1, further comprising a second beacon to emit light energy from a second location remote from a handheld laser welding torch of the handheld laser welding system.

4. The beacon of claim 3, wherein the second beacon is arranged on a welding power supply, a welding auxiliary system, a wall, or a fixture in a work environment.

5. The beacon of claim 3, wherein the beacon and the second beacon are configured to operate in response to command signals from one or more control circuits.

6. The beacon of claim 5, wherein the one or more control circuits transmit the command signals via wired or wireless communications protocols or wherein the one or more control circuits are located in the handheld laser welding torch, handheld laser cleaning tool, the laser welding power supply, or the laser welding auxiliary system.

7. The beacon of claim 1, wherein an intensity or concentration of the light emitted from a first surface of the plurality of surfaces is different light emitted from a second surface of the plurality of surfaces.

8. A laser welding system, comprising:
a laser welding accessory;
a beacon arranged on the laser welding accessory, the beacon configured to emit light of a first intensity at a wavelength within a spectrum visible to a human; and
a lens configured to filter or attenuate the light, such that a filtered light has a second intensity lower than the first intensity.

9. The laser welding system of claim 8, wherein the accessory is a power supply or a wire feeder or a laser welding torch or an andon light or wherein the lens is incorporated with or mounted on a welding helmet, goggles, a face shield, or glasses.

10. The laser welding system of claim 8, wherein the lens is configured to filter light at the first intensity wavelength, and an infrared (IR) wavelength.

11. The laser welding system of claim 10, wherein the lens is further configured to filter light at an ultraviolet (UV) wavelength.

12. The laser welding system of claim 8, wherein the beacon is configured to be activated by a control circuit, the control circuit configured to:
receive one or more instructions from the laser welding system corresponding to an initiation sequence for the handheld laser welding torch; and
activate the beacon in response to the activation sequence and optionally, wherein the control circuit is further configured to deactivate the beacon upon completion of a laser welding operation.

13. The laser welding system of claim 12, wherein the control circuit is further configured to control a frequency or pattern of the emitted light.

14. The laser welding system of claim 13, wherein the frequency or pattern comprises a uniform pulse or wherein the frequency or pattern comprises an irregular pulse.

15. A beacon for a handheld laser welding system, comprising:
one or more surfaces; and
one or more light sources configured to emit light energy from the one or more surfaces in multiple directions, wherein the beacon is configured to emit light of a first intensity at a wavelength within a spectrum visible to a human, wherein the beacon is mounted to a handheld laser welding system.
